# EUROPÄISCHE PATENTSCHRIFT

(11) **EP 2 130 789 B1**
(45) Veröffentlichungstag und Bekanntmachung des Hinweises auf die Patenterteilung: **26.01.2011**
(21) Anmeldenummer: 09003512.2
(22) Anmeldetag: 11.03.2009
(51) Int. Cl.: B65G 1/04

(54) **Anlage zum Be- und Entladen von Hochregalen mit hängender Ware**
Assembly for loading and unloading high racks for hanging goods
Installation de chargement et de déchargement de rayonnages de grande hauteur pour produits suspendus

(30) Priorität: 29.05.2008 DE 102008025778
(43) Veröffentlichungstag der Anmeldung: 09.12.2009
(73) Patentinhaber: Dürkopp Fördertechnik GmbH, 33719 Bielefeld (DE)
(72) Erfinder: Völker, Sigurd Paul, 32602 Vlotho (DE); Wend, Michael, 33619 Bielefeld (DE); Johannesmann, Thomas, 33719 Bielefeld (DE)
(74) Vertreter: Rau, Manfred

(56) Entgegenhaltungen:
- EP-A1- 0 899 217
- EP-A1- 1 972 577

## Beschreibung

Die Erfindung betrifft eine Anlage zum Be- und Entladen von Hochregalen mit hängender Ware nach dem Oberbegriff des Anspruches 1.

Aus der EP 0 899 217 B1 ist eine derartige Anlage bekannt, bei der die Förder-Anlage permanent in Führungsschienen geführte Trolleys aufweist, an denen herausnehmbare Trage-Stangen angebracht sind. Auf diesen Trage-Stangen wird hängende Ware, beispielsweise auf Bügeln hängende Bekleidung, transportiert. Mittels eines Regal-Bedien-Geräts wird eine solche Trage-Stange mit hängender Ware aus einem Trolley herausgenommen und in entsprechende Aufnahmen eines Hochregals eingehängt. Die Entnahme erfolgt in umgekehrter Richtung, d. h. das Regal-Bedien-Gerät nimmt eine Trage-Stange mit daran hängender Ware aus dem Hochregal heraus und hängt sie in einen Trolley der Förderanlage, in dem sich keine Trage-Stange befindet, ein. Diese bekannte Ausgestaltung hat zur Folge, dass je nach Größe der Förder-Anlage, eine große Zahl von Trage-Stangen im Umlauf sind, die je nach Bedarf innerhalb der Gesamtanlage transportiert und zu einer Stelle gebracht werden müssen, an der sie benötigt werden. Wenn die Ware mit Lkw's angeliefert oder abtransportiert wird, muss an der Verladestelle ein Umladen von den auf den Trolleys befindlichen Trage-Stangen auf den Lkw und umgekehrt erfolgen. Die Trage-Stangen müssen dann wieder in den Bereich des Hochregals zurücktransportiert werden.

Aus der nicht vorveröffentlichten, gemäß Art. 54 (3) EPÜ zum Stand der Technik gehörenden EP 1 972 577 A1 ist eine Anlage zum Be- und Entladen von Hochregalen,
- mit einer Be- und Entlade-Station, die
   -- an eine Förder-Anlage zum Transport von an Haken hängender Ware angeschlossen ist und
   -- ein Paar von Transport-Aufnahmen aufweist, die einer Zuführung und einer Abführung der Förder-Anlage unverschiebbar zugeordnet sind,
- mit einem Regal-Bedien-Gerät, das
   -- zwischen der Be- und Entladestation und mindestens einem Hochregal verfahrbar ist und
- mit einer am Regal-Bedien-Gerät angebrachten Lastaufnahme-Vorrichtung, die
   --- vertikal verfahrbar ausgebildet ist und
   --- einen in einer horizontal und quer zur Transport-Richtung verlaufenden Übergabe-Richtung verschiebbaren Greifer-Schlitten aufweist,
- mit drei in Übergaberichtung jeweils um den Abstand a voneinander beabstandeten, am Greifer-Schlitten angeordneten Greif-Einrichtungen,
- mit einer unterhalb des Greifer-Schlittens angeordneten Zwischen-Aufnahme für eine leere Trage-Stange
   und
- mit mindestens einem Hochregal mit Lager-Abteilen, in denen jeweils
   -- ein Paar von Lager-Aufnahmen für eine mit Ware bestückte Trage-Stange und
   -- ein Paar von Ablege-Aufnahmen für eine leere Trage-Stange vorgesehen sind, die von den Lager-Aufnahmen den Abstand a aufweisen,
bekannt.

Der Erfindung liegt die Aufgabe zugrunde, eine Anlage nach dem Oberbegriff des Anspruches 1 zu schaffen, die besonders einfach aufgebaut ist und eine einfache und schnelle Betriebsweise ermöglicht.

Diese Aufgabe wird erfindungsgemäß durch die Merkmale im Kennzeichnungsteil des Anspruches 1 gelöst. Durch die erfindungsgemäßen Maßnahmen wird erreicht, dass in jedem zu beschickenden oder zu entleerenden Lager-Abteil jeweils nur eine leere, also nicht mit Ware bestückte Trage-Stange oder eine mit Ware bestückte Trage-Stange vorhanden ist, in die jeweils bei einer Zuführung oder eine Entnahme einer mit Ware bestückten Trage-Stange im selben Arbeitsschritt umgesetzt oder entnommen werden, so dass alle Trage-Stangen lediglich im Bereich zwischen der Be- und Entlade-Station, dem Regal-Bedien-Gerät und dem mindestens einen Hochregal umlaufen. Die eigentliche Förder-Anlage ist hiervon völlig unabhängig. Dort erfolgt der Transport, d. h. die Förderung der Ware einschließlich der Beladung und Entladung von Lkw's völlig unabhängig von dem Umschlag im Hochregal-Lager. Das Regal-Bedien-Gerät kann gleichzeitig eine mit Ware bestückte Trage-Stange aufnehmen und eine leere Trage-Stange ablegen. Entsprechendes gilt für die Be- und Entladestation.

Weitere vorteilhafte Ausgestaltungen ergeben sich aus den Unteransprüchen.

Weitere Vorteile, Merkmale und Einzelheiten der Erfindung ergeben sich aus der nachfolgenden Beschreibung eines Ausführungsbeispiels anhand der Zeichnung. Es zeigt:

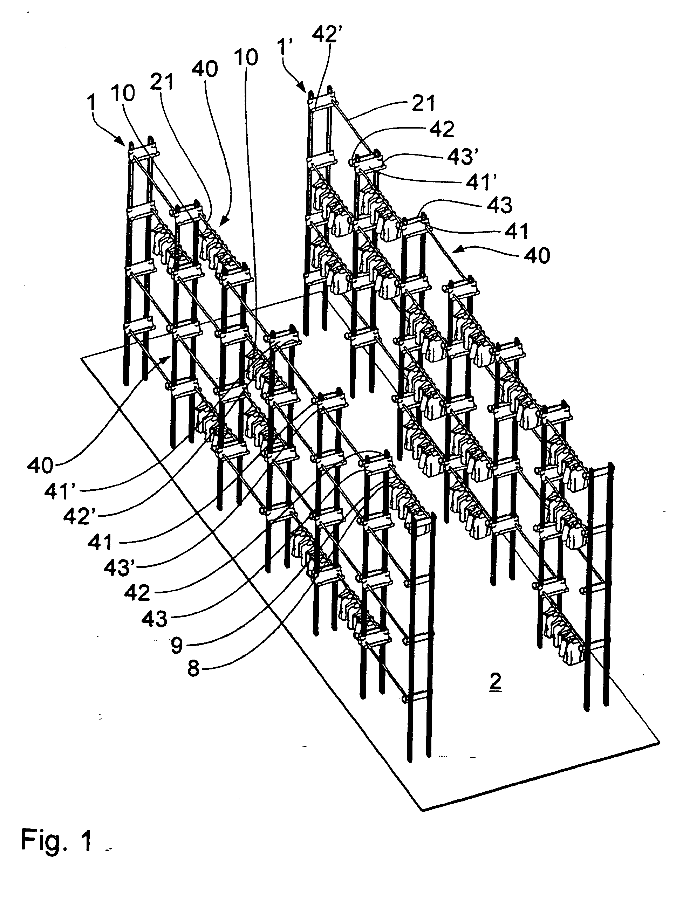

- Fig. 1: ein Hochregal-Lager in schräg-perspektivischer Draufsicht ohne eine erfindungsgemäße Anlage zum Be- und Entladen;
- Fig. 2: eine Draufsicht auf das Hochregal-Lager mit einer Anlage zum Be- und Entladen in schematischer Darstellung,
- Fig. 3: eine Stirnansicht der Anlage nach Fig. 2 mit nur einem Hoch- regal vor der Übernahme einer mit Ware bestückten Trage- Stange aus einer Be- und Entlade-Station,
- Fig. 4: eine Teildarstellung von Fig. 3 in einem weiteren Vorberei- tungsschritt auf die Entnahme der Trage-Stange aus der Be- und Entladestation,
- Fig. 5: die Ansicht gemäß Fig. 4 unmittelbar vor der Aufnahme der mit Ware bestückten Trage-Stange aus der Be- und Entlade- station,
- Fig. 6: eine Draufsicht entsprechend Fig. 2 in dem Arbeitsschritt ent- sprechend Fig. 5,
- Fig. 7: eine Darstellung gemäß Fig. 4 während der Aufnahme der mit Ware bestückten Trage-Stange von der Be- und Entlade- station,
- Fig. 8: eine Ansicht entsprechend Fig. 3 mit der in das Regal- Bedien-Gerät verfahrenen mit Ware bestückten Trage-Stange,
- Fig. 9: eine Draufsicht entsprechend Fig. 2 und 6 in dem Arbeits- schritt entsprechend Fig. 8,
- Fig. 10: das Regal-Bedien-Gerät mit der mittig aufgenommenen mit Ware bestückten Trage-Stange zwischen zwei Hochregalen,
- Fig. 11: eine Ansicht entsprechend Fig. 3 beim Übersetzen der mit Ware bestückten Trage-Stange in ein Lager-Abteil eines Hochregals,
- Fig. 12: eine Darstellung entsprechend Fig. 10 bei dem Arbeitsschritt gemäß Fig. 11,
- Fig. 13: die Be- und Entlade-Station in einer perspektivischen Darstel- lung beim Zuführen von hängender Ware,
- Fig. 14: die Be- und Entlade-Station unmittelbar nach dem Einführen von hängender Ware auf eine zu bestückende Trage-Stange und
- Fig. 15: die Be- und Entlade-Station nach dem Entnehmen der mit Ware bestückten Trage-Stange.

Das in der Zeichnung dargestellte Lager mit einer Anlage zum Be- und Entladen von Hochregalen mit an Haken hängender Ware weist Hochregale 1, 1', die in Reihen parallel zueinander angeordnet sind, wobei benachbarte Reihen von Hochregalen 1, 1' jeweils einen Gang 2 zwischen sich freilassen.

Vor den Reihen von Hochregalen 1, 1' ist eine Förder-Anlage 3 angeordnet, der eine Be- und Entlade-Station 4 zugeordnet ist. Auf der den Hochregalen 1, 1' zugewandten Seite der Station 4 ist ein Regal-Bedien-Gerät 5 vorgesehen, das jeweils in einem Gang 2 verfahren werden kann.

Die Förder-Anlage 3 weist stangenförmige Förderschienen 6 auf, auf die Bügel 8 mit ihren Haken 9 gehängt sind. Sie werden mittels einer Kette in einer Förder-Richtung 7 bewegt, an der hinter die Haken 9 greifende Stifte angebracht sind. Auf den Bügeln 8 hängt Ware 10, in sehr vielen Fällen Bekleidungsstücke. Solche Förder-Anlagen 3 sind in der Praxis allgemein bekannt und bedürfen daher keiner näheren Beschreibung.

Die Be- und Entladestation 4 weist eine Verschiebe-Einrichtung 11 auf, die einen um eine Schwenk-Achse 12 hochschwenkbaren Rahmen 13 aufweist, an dem ein mit bürstenartigen Schiebern 14 bestücktes Transport-Band 15 drehantreibbar gelagert ist. Unterhalb des Transport-Bandes 15 sind an den Rahmen 13 tragenden Stützen 16 in Transport-Richtung 17 des Transport-Bandes 15 voneinander distanziert Transport-Aufnahmen 18, 18' angeordnet. Mittels Verschiebe-Antrieben 19 sind quer zur Transport-Richtung 17 verschiebbare Park-Aufnahmen 20, 20'für leere Trage-Stangen 21 vorgesehen, die in ihrer zurückgefahrenen Stellung einen Abstand a von den Aufnahmen 18, 18' aufweisen. Mittels der Verschiebe-Antriebe 19 kann eine in die Park-Aufnahmen 20, 20' eingelegte leere Trage-Stange 21 in die Transport-Aufnahmen 18, 18' überführt werden. Eine in den Aufnahmen 18, 18' unterhalb des heruntergeklappten Transport-Bandes 15 befindliche Trage-Stange 21 liegt bündig und zentriert mit einer Zuführ-Stange 22 und einer Abführ-Stange 23.

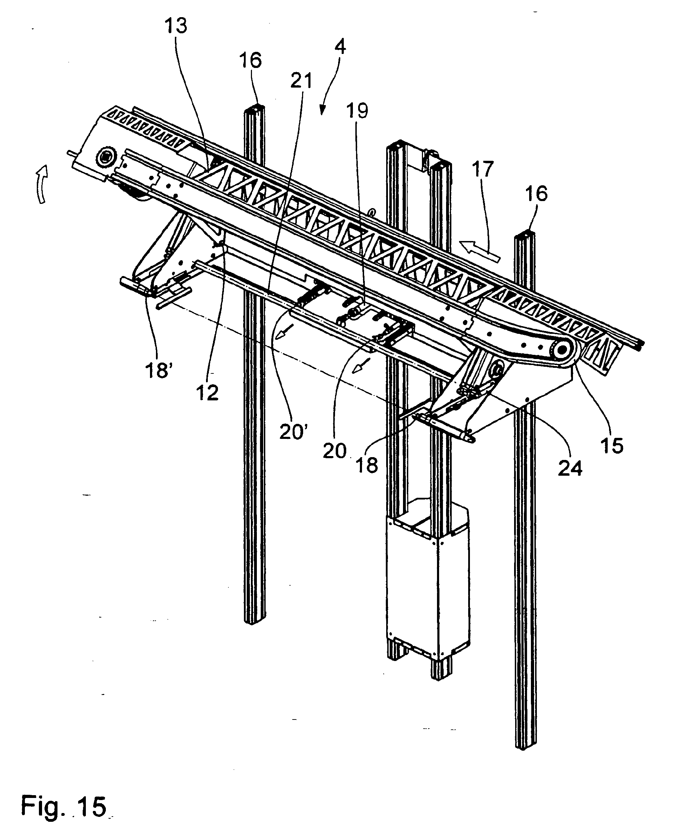

Die Zuführ-Stange 22 ist an die Förder-Schiene 6 angeschlossen, so dass hierüber auf Bügeln 8 hängende Ware 10 zugeführt werden kann. Sie kann dann mittels der Schieber 14 des Transport-Bandes 15 auf die Trage-Stange 21 aufgeschoben werden. Über die Abführ-Stange 23 wird auf Bügeln 8 hängende Ware, die sich auf einer Trage-Stange 21 befindet und wieder auf die Förder-Anlage 3 zurückgegeben werden soll, auf die Abführ-Stange 23 geschoben, die wiederum an die Förder-Schiene 6 angeschlossen ist. Das Verschwenken des Rahmens 13 in eine untere Verschiebe-Stellung und eine obere inaktive Stellung erfolgt mittels Schwenk-Antrieben 24 (siehe hierzu Fig. 15).

Das Regal-Bedien-Gerät 5 ist jeweils im Gang 2 auf Boden-Schienen 25 verfahrbar. Hierzu weist es einen Antriebs-Teil 26 auf, der auf Rädern 27 angetrieben in den Boden-Schienen 25 geführt verfahren wird. Außerdem weist es eine an einer vertikalen Hub-Führung 28 verfahrbare Lastaufnahme-Vorrichtung 29 auf. Die Lastaufnahme-Vorrichtung 29 weist ein quaderförmiges allseits offenes rahmenartiges Gestell 30 auf, das auf der Hub-Führung 28 vertikal verfahrbar ist. In dem Gestell 30 ist ein Greifer-Schlitten 31 angeordnet, der zwei in Transport-Richtung 17 voneinander beabstandete, teleskopartig ausgebildete, seitlich aus dem Gestell 30 ausfahrbare Greifer-Arme 32 aufweist, an denen jeweils in einer Übergabe-Richtung 33 voneinander beabstandete Greifer 34, 35, 36 angeordnet sind. Die Übergabe-Richtung 33 verläuft horizontal und quer zur Transport-Richtung 17. Der Abstand a benachbarter Greifer 34, 35 bzw. 35, 36 ist identisch dem Abstand a der Transport-Aufnahmen 18, 18' und der Park-Aufnahmen 20, 20' voneinander. Der Greifer-Schlitten 31 ist in Übergabe-Richtung 33 beidseitig aus dem Gestell 30 ausschiebbar. Seine Vertikalbewegungen erfolgen durch Verschieben der Lastaufnahme-Vorrichtung 29 auf der Hub-Führung 28.

Unterhalb des Greifer-Schlittens 31 ist ein Paar von Zwischen-Aufnahmen 39 für eine Trage-Stange 21 am Gestell 30 in vertikaler Richtung und in Übergabe-Richtung 33 verschiebbar angeordnet.

In jedem Hochregal 1 bzw. 1' sind in den der Länge der Waren 10 entsprechenden Abständen übereinander Lager-Abteile 40 ausgebildet. Diese Lager-Abteile 40 weisen in einem der Länge b der Trage-Stangen 21 entsprechenden Abstand Auflagen 41, 41' auf, in denen wiederum zwei Paare von Aufnahmen 42, 42', 43, 43' ausgebildet sind. Bei den dem Gang 2 benachbarten Aufnahmen 42, 42' handelt es sich um Lager-Aufnahmen 42, 42'. Bei den dem Gang 2 abgewandten Aufnahmen handelt es sich um Ablege-Aufnahmen 43, 43'. Die in jeder Auflage 41, 41' im Abstand a in Übergabe-Richtung 33 voneinander beabstandeten Aufnahmen 42, 42' und 43, 43' sind durch Ausnehmungen, Kerben oder dergleichen gebildet.

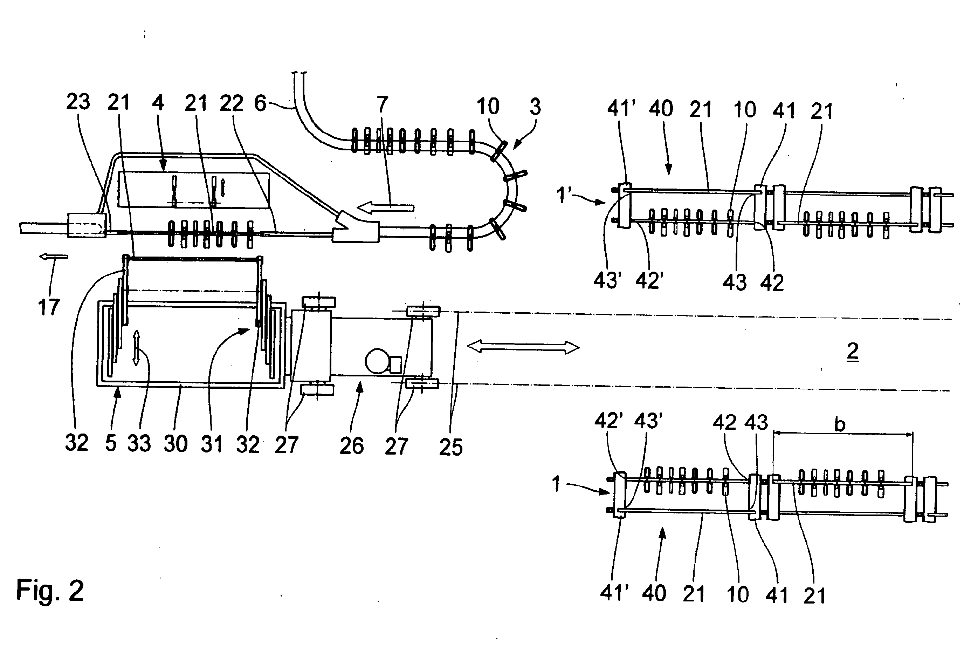

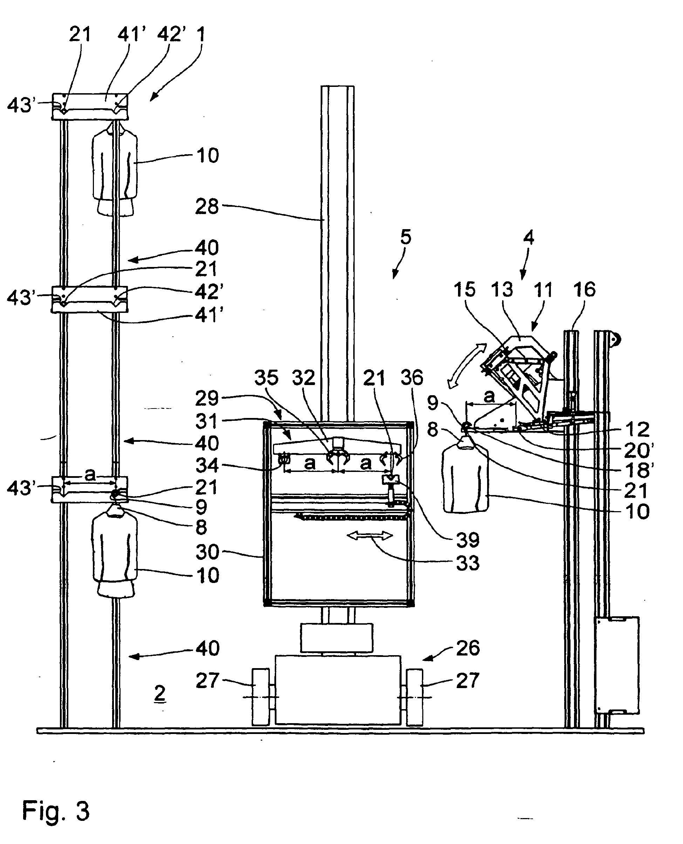

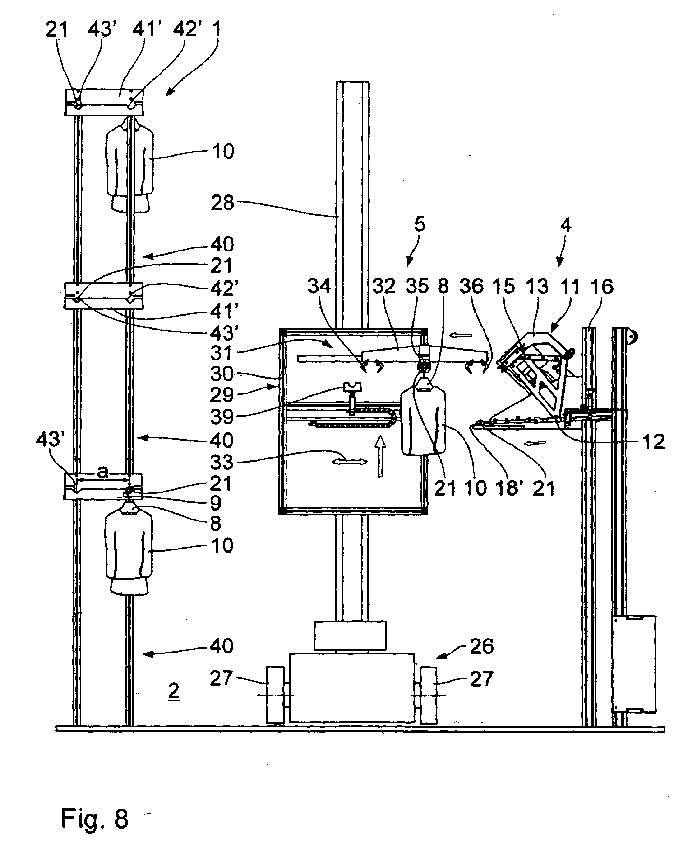

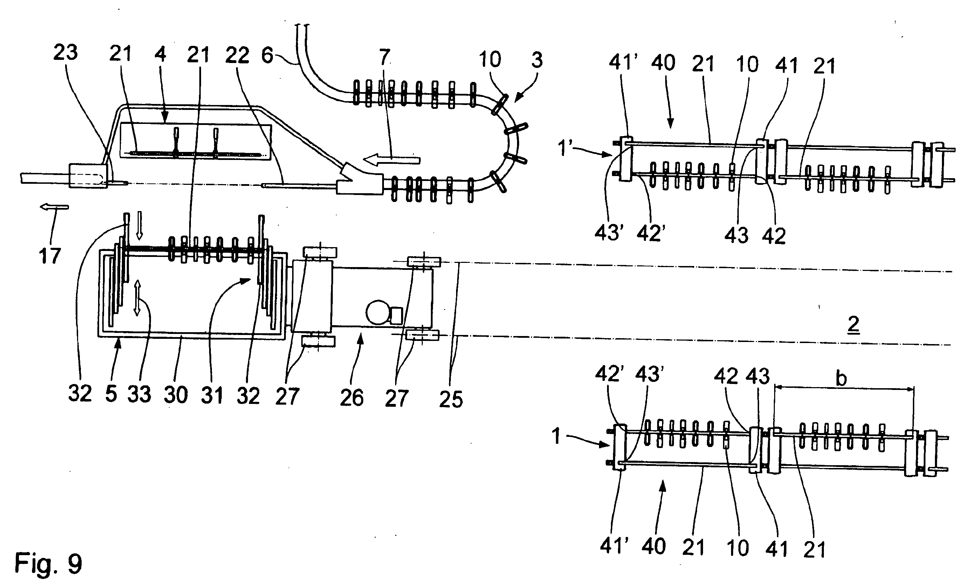

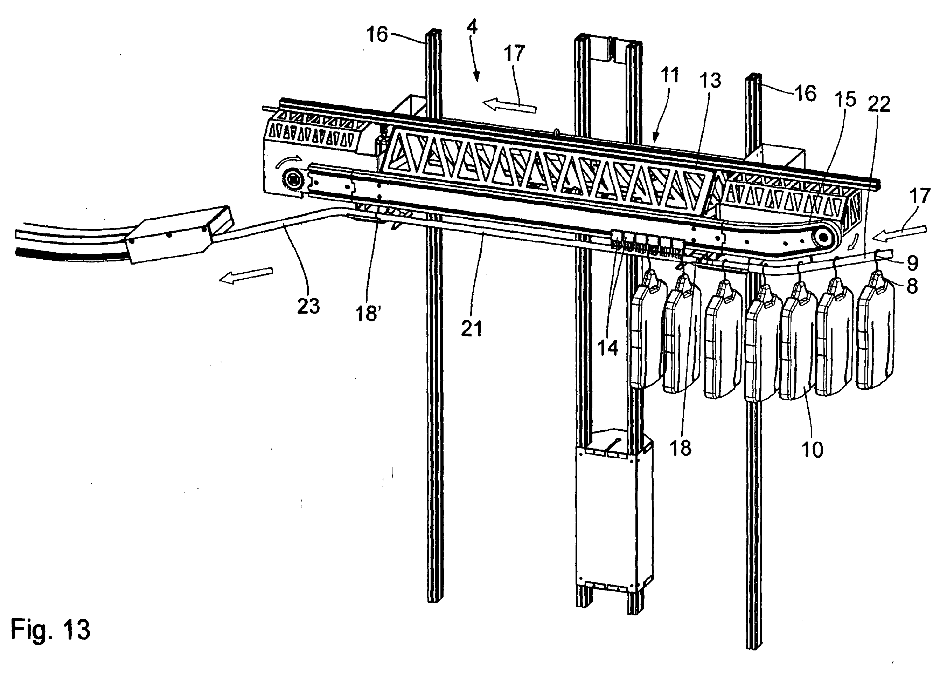

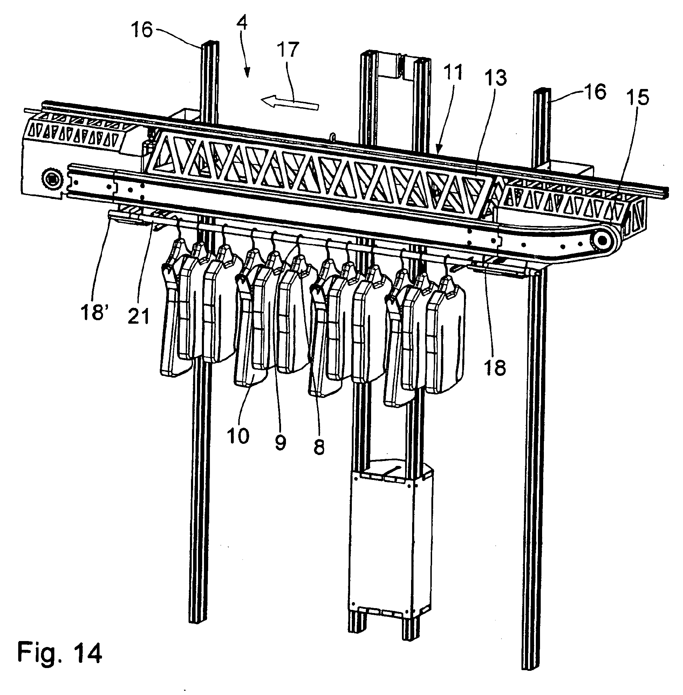

Ein Einlagerungs-Vorgang, d. h. die Übergabe von Ware 10 von der Förder-Anlage 3 auf ein Hochregal 1 wird nachfolgend anhand der Fig. 2 bis 15 erläutert:
In den Transport-Aufnahmen 18, 18' der Be- und Entladestation 4, also fluchtend mit der Zuführ-Stange 22 und der Abführ-Stange 23 befindet sich eine Trage-Stange 21. Der Rahmen 13 mit dem Schieber 14 ist in seine untere Transport-Stellung heruntergeschwenkt. Über die Zuführ-Stange 22 wird von der Förder-Anlage 3 auf Bügeln 8 hängende Ware 10 zugeführt. Die Bügel 8 werden von den bürstenartigen Schiebern 14 des in Transport-Richtung 17 angetriebenen Transport-Bandes 15 ergriffen und auf die Trage-Stange 21 aufgeschoben, wie den Fig. 2, 13 und 14 entnehmbar ist. Anschließend wird der Rahmen 13 mit dem Transport-Band 15 in die in Fig. 3 dargestellte hochgeschwenkte inaktive Position verschwenkt, so dass der Raum oberhalb der Transport-Aufnahmen 18, 18' für den Greifer-Schlitten 31 des Regal-Bedien-Geräts 5 zugänglich ist.

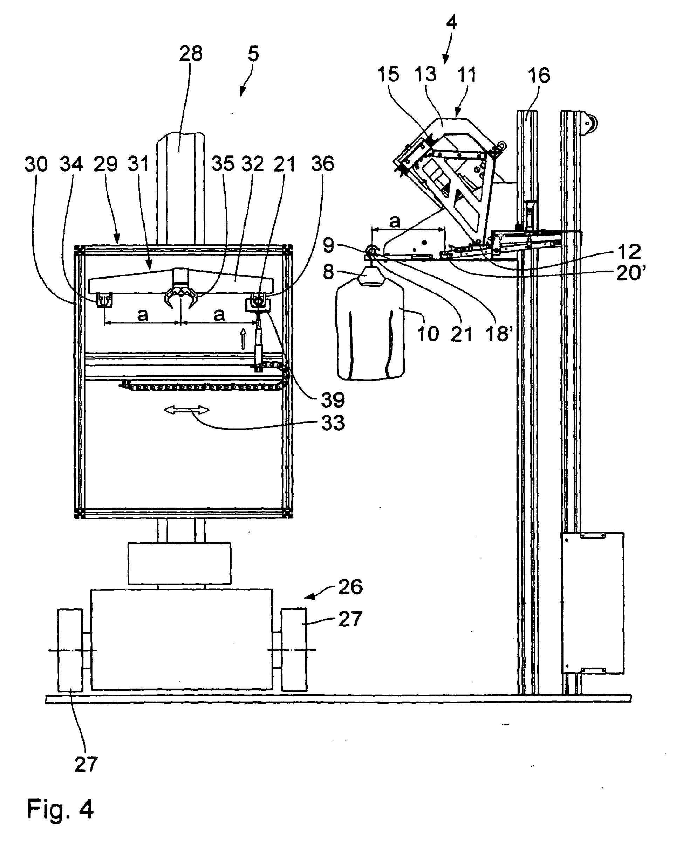

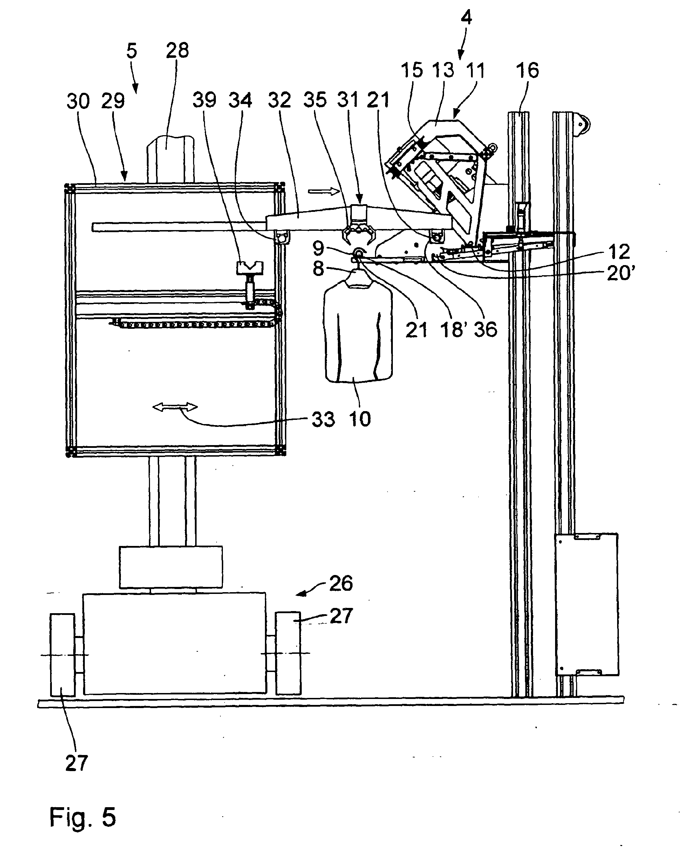

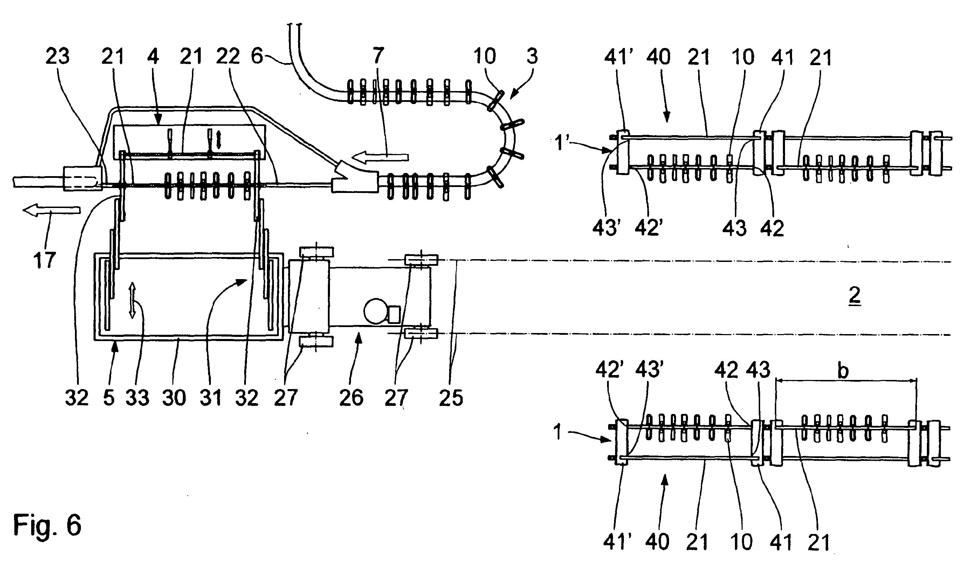

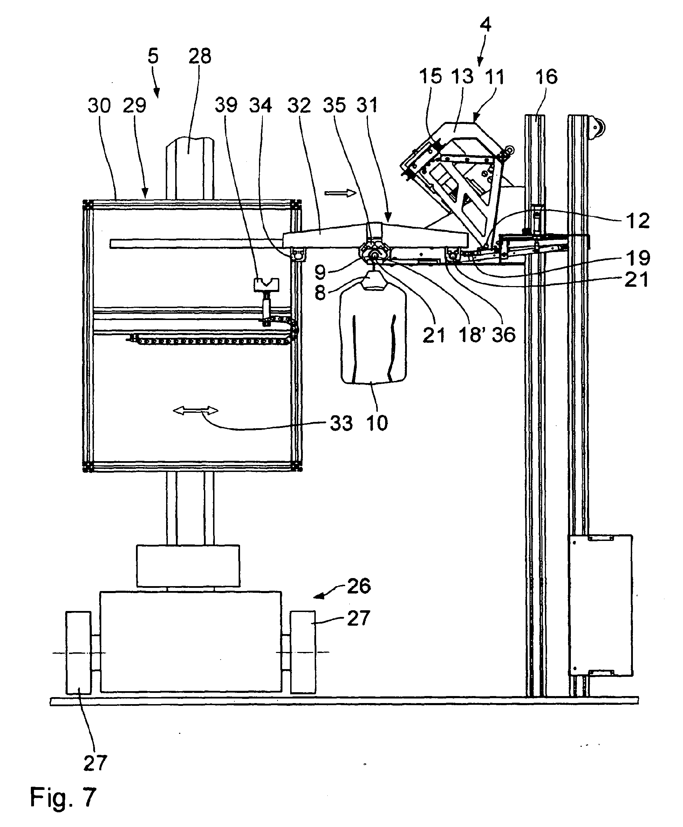

Wie Fig. 3 entnehmbar ist, befindet sich in den Zwischen-Aufnahmen 39 eine leere Trage-Stange 21. Diese wird entsprechend Fig. 4 nach oben verfahren und von den zangenartigen Greifern 36, die der Station 4 zugewandt sind, aufgenommen. Anschließend wird entsprechend Fig. 5 der Greifer-Schlitten 31 so weit nach oben gefahren, dass er anschließend in Übergabe-Richtung 33 über die Transport-Aufnahmen 18, 18' verfahren werden kann, wie es in Fig. 5 und 6 dargestellt ist. Hierbei befindet sich das Paar der mittleren Greifer 35 oberhalb der Trage-Stange 21 mit Ware 10. Die Greifer 36 mit der leeren Trage-Stange 21 befinden sich oberhalb der Park-Aufnahmen 20, 20', die dem Gerät 5 abgewandt sind. Nach dem Absenken des Greifer-Schlittens 31 in Richtung zu den Aufnahmen 18, 18' werden die Greifer 36 geöffnet, so dass die leere Trage-Stange 21 in die Park-Aufnahmen 20, 20' abgelegt wird. Gleichzeitig werden die mittleren Greifer 35 geschlossen und nehmen die mit Ware 10 gefüllte Trage-Stange 21 auf, wie es in Fig. 6 und 7 dargestellt ist. Danach verfährt der Schlitten 31 wieder in seine mittlere Stellung im Gestell 30. Wenn eine weitere Beschickung des Hochregals 1 erfolgen soll, wird die in den Park-Aufnahmen 20, 20' befindliche leere Trage-Stange 21 mittels des Verschiebe-Antriebs 19 in die Transport-Aufnahmen 18, 18' verschoben.

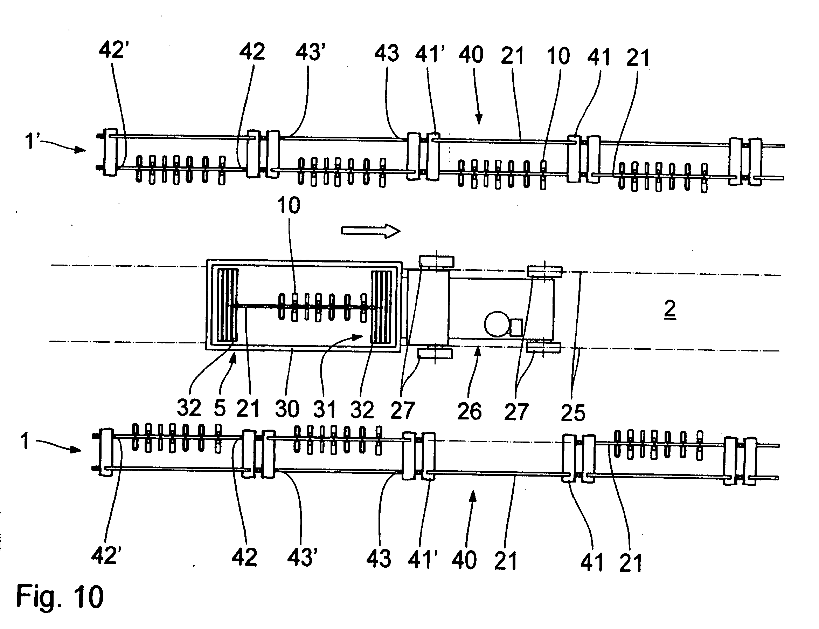

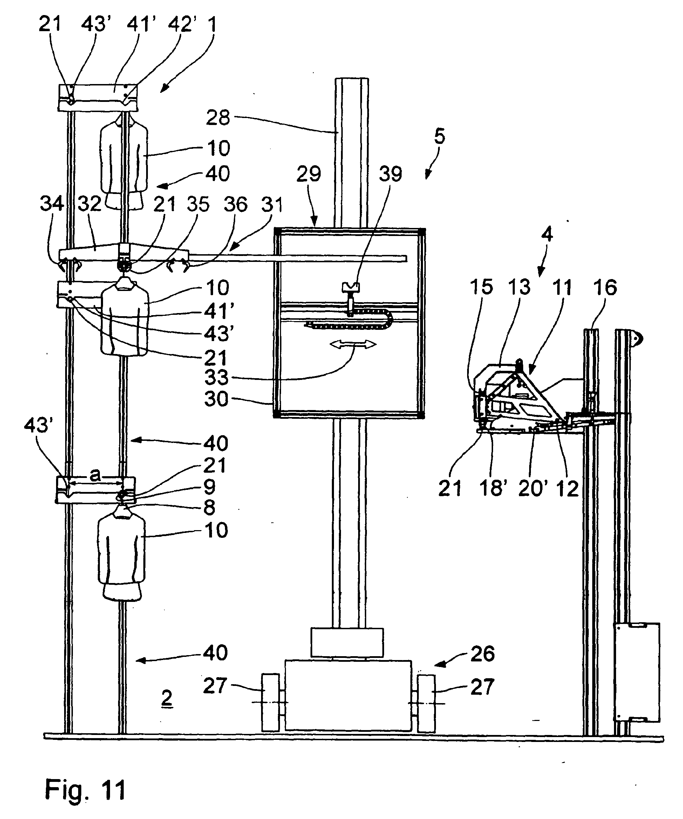

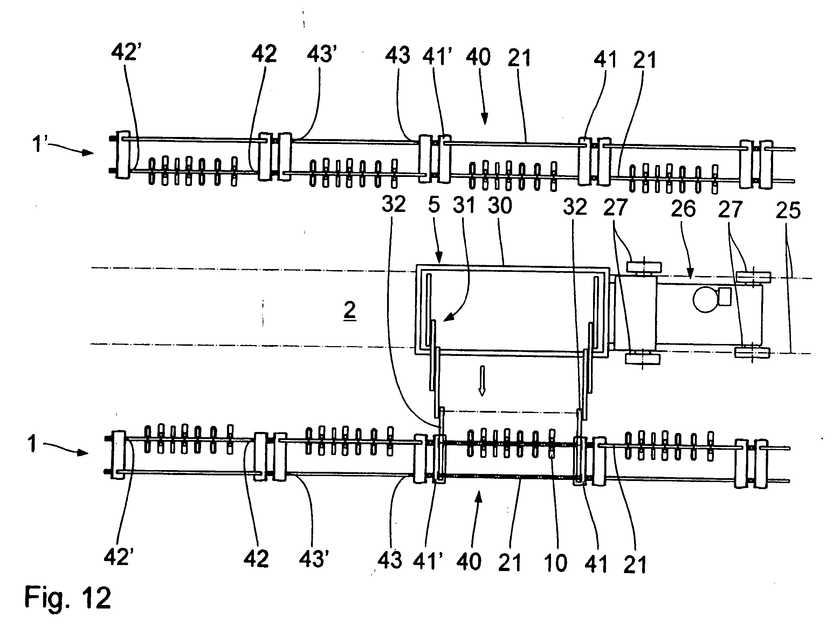

Das Regal-Bedien-Gerät 5 wird auf den Schienen 25 bis vor ein Lager-Abteil 40 verfahren, wobei gleichzeitig die Lastaufnahme-Vorrichtung 29 entsprechend der Höhen-Lage des Lager-Abteils 40 in der Höhe verfahren wird, wie es in den Fig. 10 und 11 dargestellt ist. Außerdem wird bereits der Greifer-Schlitten 31 in Richtung zum Hochregal 1 hin verfahren. Wie Fig. 11 und 12 entnehmbar ist, wird die von den mittleren Greifern 35 getragene Trage-Stange 21 mit Ware 10 in den Lager-Aufnahmen 42, 42' abgelegt, die dem Gang 2 und damit dem Regal-Bedien-Gerät 5 zugewandt sind. Die in den dem Gang 2 abgewandten Ablege-Aufnahmen 43, 43' liegende leere Trage-Stange 21 wird dagegen gleichzeitig von den dem Hochregal 1 zugewandten Greifer 34 ergriffen und herausgenommen. Danach wird der Greifer-Schlitten 31 wieder angehoben und in das Gestell 30 zurück verfahren, bis der Greifer-Schlitten 31 wieder seine mittlere in Fig. 3 und 4 dargestellte Position einnimmt. Die Zwischen-Aufnahme 39 übernimmt dann die von den Greifern 34 getragene leere Stange 21.

Weitere Einlagerungs-Schritte gehen in der gleichen Weise vonstatten, wobei zuerst die in den Park-Aufnahmen 20, 20' liegende leere Trage-Stange 21 mittels der Verschiebe-Aritriebe 19 in die Transport-Aufnahmen 18, 18' verschoben wird, damit Ware 10 hierauf geschoben werden kann.

Die Entnahme von Trage-Stangen 21 mit Ware 10 aus einem Lager-Abteil 40 geht in umgekehrter Reihenfolge vor sich. Mit den Greifern 34 wird eine leere Trage-Stange 21 aus der Zwischen-Aufnahme 39 erfasst. Danach wird der Greifer-Schlitten 31 in das entsprechende, zu entleerende Lager-Abteil 40 verfahren. Dort wird die leere Trage-Stange 21 in den Ablege-Aufnahmen 43, 43' abgelegt und gleichzeitig mit den Greifern 35 die mit Ware 10 bestückte Trage-Stange 21 erfasst. Nach dem Zurückfahren des Greifer-Schlittens 31 in das Gestell 30 wird das Regal-Bedien-Gerät 5 vor die Be- und Entlade-Station 4 verfahren und danach der Greifer-Schlitten 31 in Übergabe-Richtung zur Be- und Entlade-Station 4 verfahren, so dass die mittleren Greifer 35 sich oberhalb der Transport-Aufnahmen 18, 18' befinden. Danach erfolgt das Absetzen der mit Ware 10 bestückten Trage-Stange 21 in den Transport-Aufnahmen 18, 18'. Anschließend wird der Greifer-Schlitten 31 in das Gestell 30 zurück verfahren.

Wie sich aus dem Vorstehenden ergibt, bleiben alle Trage-Stangen 21 in der geschilderten Anlage; sie werden also nicht von der Förder-Anlage 3 mitgenommen. Das Umsetzen der Trage-Stangen 21 einerseits im Hochregal 1, 1' und andererseits in der Be- und Entlade-Station 4 ist deshalb notwendig, weil sehr unterschiedlich entweder hintereinander mehrfach mit Ware 10 bestückte Trage-Stangen 21 in ein Hochregal 1, 1' verbracht werden müssen, oder hintereinander jeweils mehrfach mit Ware 10 bestückte Trage-Stangen 21 aus einem Hochregal 1, 1' in die Be- und Entlade-Station 4 verbracht werden müssen.

Wichtig für die geschilderten Funktionen ist, dass die Abstände a der Transport-Aufnahmen 18, 18' von den zurückgefahrenen Park-Aufnahmen 20, 20' und die Abstände a der jeweils benachbarten Greifer 34, 35 und 35, 36 voneinander und der Lager-Aufnahmen 42, 42' von den Ablege-Aufnahmen 43, 43' identisch sind. Dies ermöglicht es, das Aufnehmen oder Ablegen von leeren Trage-Stangen 21 und mit Ware 10 bestückten Trage-Stangen 21 jeweils gleichzeitig, also in einem einzigen Arbeitsschritt, vorzunehmen.

## Patentansprüche

1. Anlage zum Be- und Entladen von Hochregalen,
- mit einer Be- und Entlade-Station (4),
- mit einem Regal-Bedien-Gerät (5), das
-- zwischen der Be- und Entladestation (4) und mindestens einem Hochregal (1, 1') verfahrbar ist,
- mit einer am Regal-Bedien-Gerät (5) angebrachten Lastaufnahme-Vorrichtung (29), die
--- vertikal verfahrbar ausgebildet ist und
--- einen in einer horizontal und quer zur Transport-Richtung (17) verlaufenden Übergabe-Richtung (33) verschiebbaren Greifer-Schlitten (31) aufweist,
- mit am Greifer-Schlitten (31) angeordneten Greif-Einrichtungen (34, 35, 36) und
- mit mindestens einem Hochregal (1, 1') mit Lager-Abteilen (40), in denen jeweils ein Paar von Lager-Aufnahmen (42, 42') für eine mit Ware (10) bestückte Trage-Stange (21) vorgesehen sind,
**dadurch gekennzeichnet,**
**dass** die Be- und Entlade-Station (4)
-- an eine Förder-Anlage (3) zum Transport von an Haken (9) hängender Ware (10) angeschlossen ist,
-- ein Paar von Transport-Aufnahmen (18, 18') aufweist, die einer Zuführung (22) und einer Abführung (23) der Förder-Anlage (3) unverschiebbar zugeordnet sind,
-- ein Paar von Park-Aufnahmen (20, 20') aufweist, die zwischen einer mit der Zuführung (22) und der Abführung (23) fluchtenden Stellung und einer um einen Abstand a beabstandeten Endlage verschiebbar ausgeführt sind, und
-- oberhalb der Transport-Aufnahmen (18, 18') eine Verschiebe-Einrichtung (11) zum Aufschieben bzw. Herunterschieben von Ware (10) auf bzw. von einer Trage-Stange (21) in einer Transport-Richtung (17) aufweist,
**dass** am Greifer-Schlitten (31) drei in Übergaberichtung (33) jeweils um den Abstand a voneinander beabstandete Greif-Einrichtungen (34, 35, 36) angeordnet sind,
**dass** mit einer unterhalb des Greifer-Schlittens (31) eine Zwischen-Aufnahme (39) für eine leere Trage-Stange (21) angeordnet ist und **dass** in den Lager-Abteilen (40) des mindestens einen Hochregals (1, 1 ') jeweils ein Paar von Ablege-Aufnahmen (43, 43') für eine leere Trage-Stange (21 ") vorgesehen sind, die von den Lager-Aufnahmen (42, 42') den Abstand a aufweisen.

2. Anlage nach Anspruch 1, **dadurch gekennzeichnet,**
**dass** die Verschiebe-Einrichtung (11) zwischen einer unteren mit einer Trage-Stange (21) in Eingriff befindlichen Arbeits-Stellung und einer oberen Ruhe-Stellung bewegbar ist.

3. Anlage nach einem der Ansprüche 1 oder 2, **dadurch gekennzeichnet, dass** die Verschiebe-Einrichtung (11) in Transport-Richtung (17) bewegbare, mit Haken (9) in Eingriff bringbare Schieber (14) aufweist.

4. Anlage nach Anspruch 3, **dadurch gekennzeichnet,**
**dass** die Schieber (14) bürstenartig ausgebildet sind.

5. Anlage nach einem der Ansprüche 1 bis 4, **dadurch gekennzeichnet, dass** die Zwischen-Aufnahmen (39) mit jeder Greif-Einrichtung (34, 35, 36) zur Übergabe einer leeren Trage-Stange (21) in Überdeckung bringbar sind.

6. Anlage nach einem der Ansprüche 1 bis 5, **dadurch gekennzeichnet, dass** die Lager-Aufnahmen (42, 42') dem Regal-Bedien-Gerät (5) zugewandt und die Ablege-Aufnahmen (43, 43') dem Regal-Bedien-Gerät (5) abgewandt sind.

## Claims

1. Installation for loading and unloading high racks comprising
- a loading and unloading station (4);
- a rack operating device (5) which
-- is displaceable between the loading and unloading station (4) and at least one high rack (1, 1');
- a load bearing device (29) arranged at the rack operating device (5), the load bearing device (29) being
--- vertically displaceable; and
--- comprising a gripper slide (31) which is displaceable in a transfer direction (33) extending horizontally and transversely to the transport direction (17);
- gripper devices (34, 35, 36) arranged at the gripper slide (31); and
- at least one high rack (1,1') comprising storage compartments (40) in which is provided in each case one pair of storage receptacles (42, 42') for a carrier bar (21) loaded with goods (10),
**characterized in that**
the loading and unloading station (4)
-- is connected to a conveyor installation (3) for the transport of goods (10) hanging on hooks (9);
-- comprises a pair of transport receptacles (18, 18') which are undisplaceably associated to a supply (22) and a discharge (23) of the conveyor installation (3);
-- comprises a pair of parking receptacles (20, 20') which are displaceable between a position which is flush with the supply (22) and the discharge (23) and an end position which is spaced by a distance a; and
-- comprises a displacement device (11) above the transport receptacles (18, 18') for moving goods (10) onto and off a carrier bar (21) in a transport direction (17);
**that** three gripper devices (34, 35, 36) are arranged at the gripper slide (31) which are in each case spaced from each other by the distance a; **that** an intermediate receptacle (39) for an empty carrier bar (21) is arranged below the gripper slide (31); and
**that** in each case one pair of deposit receptacles (43, 43') for an empty carrier bar (21) is provided in the storage compartments (40) of the at least one high rack (1, 1'), the deposit receptacles (43, 43') having the distance a from the storage receptacles (42, 42').

2. Installation according to claim 1, **characterized in**
**that** the displacement device (11) is movable between a lower working position, which is in engagement with a carrier bar (21), and an upper rest position.

3. Installation according to one of claims 1 or 2, **characterized in**
**that** the displacement device (11) comprises sliders (14) which are movable in the transport direction (17) and are engageable with hooks (9).

4. Installation according to claim 3, **characterized in**
**that** the sliders (14) are designed in the manner of a brush.

5. Installation according to one of claims 1 to 4, **characterized in**
**that** the intermediate receptacles (39) are adapted to be overlapped with each gripper device (34, 35, 36) for the transfer of an empty carrier bar (21).

6. Installation according to one of claims 1 to 5, **characterized in**
**that** the storage receptacles (42, 42') face the rack operating device (5) while the deposit receptacles (43, 43') face away from the rack operating device (5).

## Revendications

1. Installation de chargement et de déchargement de rayonnages de grande hauteur, comprenant
- un poste de chargement et de déchargement (4),
- un transstockeur (5), qui est
-- déplaçable entre la station de chargement et de déchargement (4) et au moins un rayonnage de grande hauteur (1, 1'),
- un dispositif de prise de charge (29) disposé sur le transstockeur (5), qui
--- est conçu mobile en translation verticale, et
--- présente un chariot de préhension (31) déplaçable dans une direction de transfert (33) horizontalement et transversalement à la direction de transport (17),
- des dispositifs de préhension (34, 35, 36) disposés sur le chariot de préhension (31), et
- au moins un rayonnage de grande hauteur (1, 1') pourvu de compartiments de stockage (40) dans lesquels sont prévus respectivement une paire de réceptacles de stockage (42, 42') pour une barre porteuse (21) recevant des articles (10),
**caractérisée en ce que**
le poste de chargement et de déchargement (4)
-- est relié à un système convoyeur (3) pour le transport d'articles (10) suspendus à des crochets (9),
-- présente une paire de réceptacles de transport (18, 18') qui sont associés de façon fixe à une entrée (22) et à une sortie (23) du système convoyeur,
-- présente une paire de réceptacles de garage (20, 20') qui sont réalisés de façon à pouvoir coulisser entre une position alignée sur l'entrée (22) et la sortie (23) et une position extrême espacée d'une distance a, et
-- présente, au-dessus des réceptacles de transport (18, 18'), un dispositif de translation pour faire coulisser sur ou faire descendre d'une barre porteuse (21) les articles (10) dans une direction de transport (17),
**en ce que** sont disposés sur le chariot de préhension (31) trois dispositifs de préhension (34, 35, 36) respectivement espacés l'un de l'autre de la distance a dans la direction de transfert (33),
**en ce qu'**est disposé au-dessous du chariot de préhension (31) un réceptacle intermédiaire (39) pour une barre porteuse (21) vide et
**en ce que** sont prévues, dans les compartiments de stockage (40) du au moins un rayonnage de grande hauteur (1, 1'), respectivement une paire de réceptacles de dépose (43, 43') pour une barre porteuse (21") vide, qui présentent la distance a par rapport aux réceptacles de stockage (42, 42').

2. Installation selon la revendication 1, **caractérisée en ce que**
le dispositif de translation (11) est mobile entre une position de travail inférieure en prise avec une barre porteuse (21) et une position de repos supérieure.

3. Installation selon l'une des revendications 1 ou 2, **caractérisée en ce que** le dispositif de translation (11) présente des coulisseaux (14) déplaçables dans la direction de transport (17) et pouvant être mis en prise avec des crochets (9).

4. Installation selon la revendication 3, **caractérisée en ce que** les coulisseaux (14) sont réalisés à la manière d'une brosse.

5. Installation selon l'une des revendications 1 à 4, **caractérisée en ce que** les réceptacles intermédiaires (39) peuvent être amenés en recouvrement de chaque dispositif de préhension (34, 35, 36) pour le transfert d'une barre porteuse (21) vide.

6. Installation selon l'une des revendications 1 à 5, **caractérisée en ce que** les réceptacles de stockage (42, 42') sont orientés vers le transstockeur (5) et les réceptacles de dépose (43, 43') sont opposés au transstockeur (5).
